# EUROPEAN PATENT SPECIFICATION

(11) **EP 2 991 890 B1**
(45) Date of publication and mention of the grant of the patent: **13.06.2018**
(21) Application number: 14726317.2
(22) Date of filing: 30.04.2014
(51) Int. Cl.: A01B 29/04, A01B 49/06, A01B 69/08, A01C 7/20

(54) **AGRICULTURAL MACHINE**
LANDWIRTSCHAFTLICHE MASCHINE
MACHINE AGRICOLE

(30) Priority: 02.05.2013 CZ 20130326
(43) Date of publication of application: 09.03.2016
(73) Proprietor: Farmet A.S., 55203 Ceská Skalice (CZ)
(72) Inventor: SMOLA, Tomá, 552 04 Chvalkovice (CZ); PRISLINGER, Marek, 547 01 Náchod (CZ)
(74) Representative: Skoda, Milan
(86) International application number: PCT/CZ2014/000046
(87) International publication number: WO 2014/177120

(56) References cited:
- EP-A1- 2 534 933
- DE-A1-102004 012 791
- DE-A1-102011 050 578
- FR-A1- 2 896 949
- JP-A- 2000 270 621
- JP-A- 2003 072 602

## Description

### Technical Field

The invention relates to an agricultural machine, specifically to the rotating wheels of an agricultural machine for sowing or the application of fertiliser with at least one longitudinal hopper, at least one sowing element and at least four wheels, which, in the working mode are a working cylinder and transport wheels in the transport mode.

### State of the Art

Currently, agricultural machinery for sowing and fertiliser application is known which is usually towed by a tractor, and which is equipped with a satellite navigation system that allows the position of the machine to be pinpointed so that very precise sowing is made possible. A tractor equipped with a satellite navigation system can be navigated through a field with a great accuracy of up to 2 cm.

Current state-of-the art agricultural machinery for sowing and fertiliser application usually do not have any means of independently altering direction. Document EP 2 534 933 A1 discloses an agricultural machine according to the preamble of claim 1. The aggregation of such a machine with a tractor-controlled satellite navigation system is relatively effective on very level fields.

The problem arises when the field is on an incline or in some way undulated. In such a case, when driving along a hillside, the rig slides down the slope. A tractor equipped with a satellite navigation system can, unlike an agricultural machine for sowing and fertiliser application without such a system, correct this slip. Uneven sowing or crossed rows can result from such a slip. The slide effect, in some cases, is possible to eliminate by driving up and down in the direction of the slope. In this case, the rows are in the direction of the slope and at high risk of erosion by rainfall and the washing away of fertile top soil. Therefore, this solution is unsatisfactory.

A possible known solution is sowing machines which allow a certain measure of independent correction of direction. Changing direction is usually achieved by using discs which cut relatively deeply into the ground and serve to guide the machine. These discs can be rotated to be in the direction of travel and so with this, correct the direction of travel. A great disadvantage of this solution is that when the direction is corrected by tilting blades the machine experiences side slipping toward the wheel axles, and possibly significantly increase tensile resistance of the sower. Moreover, due to shearing of the axle or cylinder, the structure of the machine bears intense stress. Such steering discs cut fairly deep into the earth and, as they are grooved, resist pulling of the machine themselves.

From the above state-of-the-art, it is apparent that the major disadvantage of current technology is that there is no agricultural machine for sowing and fertiliser application that comprises a device which provides flexible and accurate correction of the direction of its movement.

The aim of the invention is to design agricultural machinery for sowing or fertiliser application that is able to correct the direction of its path so that the maximum accuracy of its movement over any field surface will be possible.

### Principle of the Invention

The invention largely eliminates these deficiencies and the invention fulfils the objective by an agricultural machine, specifically an agricultural machine for sowing or the application of fertiliser with at least one longitudinal hopper, at least one sowing element and at least four wheels, which, in the working mode are a working cylinder and transport wheels in the transport mode, characterised by that at least four wheels are mounted on at least two longitudinal beams, which are, at the same time, connected to a pair of transverse beams, which are aligned with each other so as to be mutually movable. Mutual movement of the transverse beams leads to rotation of the longitudinal beams, on which the wheels are mounted, thereby also turning the wheels, and thus leading to very precise guidance of the whole machine.

It is to advantage that at least one of the transverse beams be arranged so that it is fixed to the supporting frame of the agricultural machine, and the other of the transverse beams be arranged so that it is movable relative to the supporting frame of the agricultural machine, and to greatest advantage that the other of the transverse beams be arranged so that it is movable in a direction transverse to the supporting frame of the agricultural machine. In advantageous arrangement the transverse beams, which is movable, is mounted in front of the fixed transverse beam in the working direction of the agricultural machine. This design arrangement is the simplest and least expensive to produce and, it is fully functional.

It is also to advantage if the transverse beam, which is movable, with the linear drive means is connected to the supporting frame of the agricultural machine, wherein in the most advantageous arrangement, the linear means is a hydraulic cylinder. The linear drive means carries out a forced shift of the transverse beam. The degree of angle of the wheel can easily be infinitely varied by regulating the output of the hydraulic cylinder so that it is possible to perform minute changes in movement, and so it is possible to control the motion of the machine very accurately.

Alternately, the transverse beam may be movable, with the linear drive means connected to a fixed transverse beam. This option is possible, but is structurally more complicated to produce and so more expensive.

According to the first most advantageous variant, the longitudinal beam is made in a pliable shape. Such a longitudinal beam is fixedly mounted between the transverse beams, and the relative movement is made possible by the flexibility of the longitudinal beam. Displacement of the transverse beams leads to deflection of the longitudinal beams and with this the rotation of all of the wheels.

According to the second variant, the longitudinal beam is connected to the front transverse beam and rear transverse beam by joints. According to the third variant, the longitudinal beam is connected to the front transverse beam and rear transverse beam by a flexible device. This flexible device can be made based on plastic or rubber. Deflecting the transverse beams, in both versions leads to to the rotation of the longitudinal beams and the rotation of all of the wheels.

In the most advantageous embodiment, two wheels are mounted to one longitudinal beam.

It is also advantageous if on the support frame is a longitudinal hopper.

An agricultural machine according to the invention, bearing the above described mounting of its rows of wheels, allows, thanks to the fluid rotation of its wheels, very precise sowing and very precise application of fertiliser. Because there are sowing units situated behind the fixed transverse beam they are constantly precisely maintained. It is also to great advantage if, while correcting the direction of movement of the machine, the wheels do not slip sideways on the axle. From the viewpoint of the operation costs, it is advantageous that while correcting the direction of movement of the machine, there is no increase in tensile resistance, thereby not increasing fuel consumption while eliminating an increase to the load bearing structure of the machine. With respect to known technology, it is further preferred that there are no grooves from the guide disc.

This complete mechanism for rotation is simply integrated into the design of the machine and is part of the wheel cylinder, and, it is not necessary to add additional components, which saves material and reduces the weight and with this, reduces overall production costs.

### Overview of the Figures

The invention will be further illustrated by drawings in which Fig. 1 is an axonometric side view, Fig. 2 shows an axonometric top view and Fig. 3 shows an axonometric front view, all of an agricultural machine for sowing or the application of fertiliser, and, further, Fig. 4 shows a schematic view of the arrangement of the wheels, transverse beams and dimensionally deflecting longitudinal beams before and after rotation, Fig. 5 shows a schematic view of the arrangement of the wheels, transverse beams and longitudinal beams, which are articulated and mounted to the transverse beams before and after rotation, and Fig. 6 shows a schematic view of the arrangement of the wheels, transverse beams and longitudinal beams, which are mounted to the transverse beams by a flexible device before and after rotation.

### Examples of the Performance of the Invention

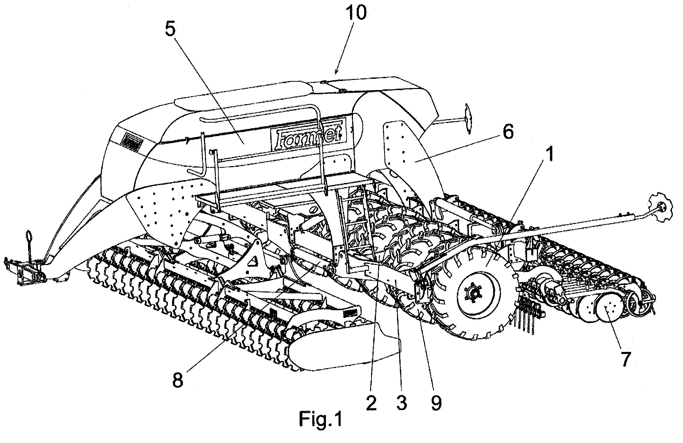

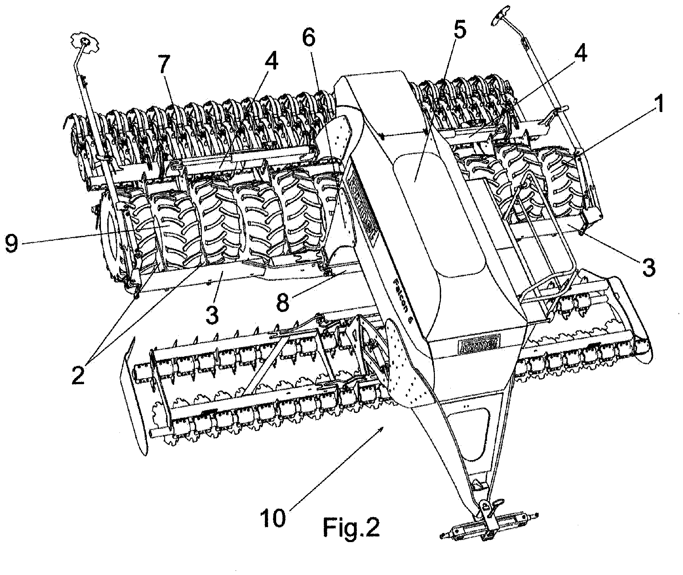

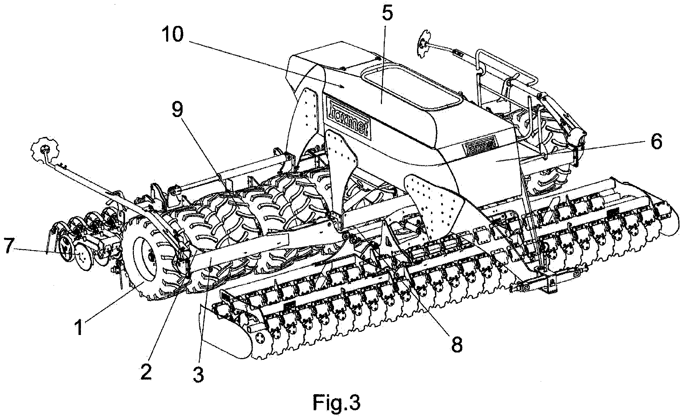

The agricultural machine 10 for sowing or the application of fertiliser (Fig. 1, Fig. 2, Fig. 3) comprising a longitudinal hopper 5, multiple seeding units 7 and in a row 9 mounted wheels 1, arranged so that in the working mode they are a working cylinder and transport wheels in the transport mode. The seeding units 7 are arranged in the direction of the working movement of the agricultural machine 10, behind the row 9 of wheels 1.

The wheels 1 are mounted in pairs on the longitudinal beams 2, which are simultaneously connected to a pair of transverse beams 3,4, which are aligned with each other as to be mutually movable. By deflection, the transverse beams 3,4 will be turning the longitudinal beams 2 and thereby rotating the wheels 1 by an angle of a.

The front mounted in the moving direction of transverse beam 3 is arranged as to be transversely movable relative to the supporting frame 6 of the agricultural machine. The rear mounted in the moving direction of transverse beam 4 is arranged as to be fixed to the supporting frame 6 of the agricultural machine. On the supporting frame 6 is a longitudinal hopper 5.

The transverse beam 3, which is movable, is by a linear drive means 8, which is a hydraulic cylinder, connected to the supporting frame 6 of the agricultural machine.

The linear means 8 is connected to the driver control system of the machine, which includes a navigation system.

In a variant not shown, the transverse beam 3, which is movable, a linear drive means 8 is connected to the fixed transverse beam 4.

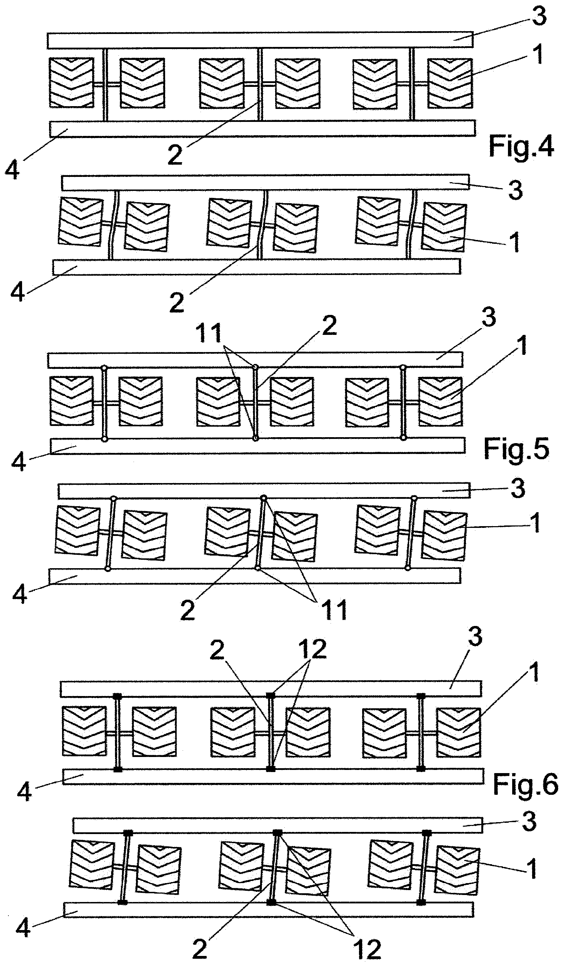

According to the first variant (Fig. 4), the longitudinal beams 2 are made in a pliable shape, and are fixedly mounted between the transverse beams 3, 4. By deflection, the transverse beams 3, 4 will be turning the longitudinal beams 2 and thereby rotating all the the wheels 1 arranged in a row 9 by an angle of α.

According to the second variant (Fig. 5), the longitudinal beams 2 and the front transverse beam 3 and rear transverse beam 4 are connected by joints 11.

According to the third variant (Fig. 6), the longitudinal beams 2 and the front transverse beam 3 and rear transverse beam 4 are connected by a pliable device 12.

In both preceding variants the transverse beams 3, 4 will be turning the longitudinal beams 2 and thereby rotating all the the wheels 1 arranged in a row 9 by an angle of α.

### Industrial Application

An agricultural machine, specifically an agricultural machine for sowing or the application of fertiliser according to the invention can be used for high-precision sowing and high-precision fertiliser application.

### List of Reference Marks

- 1: Wheel
- 2: Longitudinal beam
- 3: Transverse beam I
- 4: Transverse beam II
- 5: Longitudinal hopper
- 6: Frame
- 7: Sowing unit
- 8: Linear drive means
- 9: Row
- 10: Agricultural machine
- 11: Joint
- 12: Flexible means

## Claims

1. An agricultural machine, specifically an agricultural machine for sowing and the application of fertiliser with at least one longitudinal hopper (5), at least one sowing unit (7) and at least four wheels (1) which are arranged so that in the working mode they are a working cylinder and transport wheels in the transport mode, **CHARACTERISED BY** that at least four wheels (1) are mounted on at least two longitudinal beams (2) which are simultaneously connected to a pair of transverse beams (3,4) which are aligned with each other so as to be mutually movable.

2. The agricultural machine according to claim 1, **CHARACTERISED BY** that at least one of the transverse beams (4) is arranged as fixed relative to the supporting frame (6) of the agricultural machine, while the second of the transverse beams (3) is arranged as movable relative to the supporting frame (6) of the agricultural machine.

3. The agricultural machine according to claim 2, **CHARACTERISED BY** that the transverse beam (3), which is movable, is arranged as to be movable in a direction transverse to the supporting frame (6) of the agricultural machine.

4. The agricultural machine according to either of claims 2 and 3, **CHARACTERISED BY** that the transverse beam (3), which is movable, is mounted in front of the fixed transverse beam (4) in the direction of the working movement of the agricultural machine.

5. The agricultural machine according to any of the claims 2 to 4, **CHARACTERISED BY** that the transverse beam (3) which is movable, with the linear drive means (8) is connected to the supporting frame (6) of the agricultural machine.

6. The agricultural machine according to any of the claims 2 to 4, **CHARACTERISED BY** that the transverse beam (3) which is movable, with the linear drive means (8) is connected to a fixed transverse beam (4).

7. The agricultural machine according to any of the preceding claims **CHARACTERISED BY** that the longitudinal beam (2) is constructed as to be dimensionally pliable.

8. The agricultural machine according to any of the claims 1 to 6, **CHARACTERISED BY** that the longitudinal beam (2) is connected to the front transverse beam (3) and the rear transverse beam (4) by a joint (11).

9. The agricultural machine according to any of the claims 1 to 6, **CHARACTERISED BY** that the longitudinal beam (2) is connected to the front transverse beam (3) and the rear transverse beam (4) by a flexible means (12).

10. The agricultural machine according to any of the preceding claims **CHARACTERISED BY** that on a single longitudinal beam (2) there are mounted at least two wheels (1).

11. The agricultural machine according to any of the claims 2 to 10, **CHARACTERISED BY** that on the supporting frame (6) there is a longitudinal hopper (5).

12. The agricultural machine according to any of the claims 5 to 11, **CHARACTERISED BY** that the linear means (8) is a hydraulic cylinder.

13. The agricultural machine according to any of the preceding claims **CHARACTERISED BY** that at least one sowing unit (6) is mounted behind at least one wheel (1) in the direction of the working movement of the agricultural machine.

14. The agricultural machine according to any of the claims 5 to 13, **CHARACTERISED BY** that the linear means (8) is connected to the driver control system which contains a navigation system.

## Patentansprüche

1. Die landwirtschaftliche Maschine, insbesondere die landwirtschaftliche Maschine für die Saat oder Düngemittelanwendung, die einen Längsbehälter (5) enthält, mindestens eine Saateinheit (7) sowie mindestens vier Räder (1), die im Arbeitsregime als Arbeitswalze und im Transportregime als Transporträder im Einsatz sind, **ist dadurch gekennzeichnet, dass** mindestens vier Räder (1) auf mindestens zwei Rahmenlängsträgern (2) gelagert sind, die zugleich mit einem Paar von Querträgern (3,4) verbunden sind, die gegeneinander als gegenseitig beweglich angeordnet sind.

2. Die landwirtschaftliche Maschine nach Forderung 1, **ist dadurch gekennzeichnet, dass** mindestens einer der Querträger (4) an dem Tragrahmen (6) der landwirtschaftlichen Maschine fest angeordnet wird, wobei der andere der Querträger (3) an dem Tragrahmen (6) der landwirtschaftlichen Maschine beweglich angeordnet wird.

3. Die landwirtschaftliche Maschine nach Forderung 2, **ist dadurch gekennzeichnet, dass** der Querträger (3), der beweglich ist, in Querrichtung dem Tragrahmen (6) der landwirtschaftlichen Maschine gegenüber als beweglicher Querträger angeordnet wird.

4. Die landwirtschaftliche Maschine nach Forderungen 2 und 3, **ist dadurch gekennzeichnet, dass** der Querträger (3), der beweglich ist, vor dem Festquerträger (4) in Richtung der Einsatzbewegung der landwirtschaftlichen Maschine angeordnet wird.

5. Die landwirtschaftliche Maschine nach einer der Forderungen 2 bis 4, **ist dadurch gekennzeichnet, dass** der Querträger (3), der beweglich ist, über das lineare Antriebsmittel (8) mit dem Tragrahmen (6) der landwirtschaftlichen Maschine verbunden ist.

6. Die landwirtschaftliche Maschine nach einer der Forderungen 2 bis 4, **ist dadurch gekennzeichnet, dass** der Querträger (3), der beweglich ist, über das lineare Antriebsmittel (8) mit dem Festquerträger (4) verbunden ist.

7. Die landwirtschaftliche Maschine nach einer der vorherigen Forderungen, **ist dadurch gekennzeichnet, dass** der Längsträger (2) als formfügsam ausgeführt wird.

8. Die landwirtschaftliche Maschine nach einer der Forderungen 1 bis 6, **ist dadurch gekennzeichnet, dass** der Längsträger (2) mit dem vorderen Querträger (3) und dem hinteren Querträger (4) durch ein Gelenk (11) verbunden ist.

9. Die landwirtschaftliche Maschine nach einer der Forderungen 1 bis 6, **ist dadurch gekennzeichnet, dass** der Längsträger (2) mit dem vorderen Querträger (3) und dem hinteren Querträger (4) durch ein kraftschlüssiges Mittel (12) verbunden ist.

10. Die landwirtschaftliche Maschine nach einer der vorherigen Forderungen, **ist dadurch gekennzeichnet, dass** auf einem Längsträger (2) mindestens zwei Räder (1) gelagert sind.

11. Die landwirtschaftliche Maschine nach einer der Forderungen 2 bis 10, **ist dadurch gekennzeichnet, dass** der Tragrahmen (6) der Längsbehälter (5) ist.

12. Die landwirtschaftliche Maschine nach einer der Forderungen 5 bis 11, **ist dadurch gekennzeichnet, dass** das lineare Mittel (8) der Hydraulikzylinder ist.

13. Die landwirtschaftliche Maschine nach einer der vorherigen Forderungen, **ist dadurch gekennzeichnet, dass** mindestens eine Saateinheit (6) hinter mindestens einem Rad (1) in Richtung der Einsatzbewegung der landwirtschaftlichen Maschine angeordnet ist.

14. Die landwirtschaftliche Maschine nach einer der Forderungen 5 bis 13, **ist dadurch gekennzeichnet, dass** das lineare Mittel (8) mit dem Steuerungssystem der Maschine, welches ein Navigationssystem der Maschine beinhaltet, verbunden ist.

## Revendications

1. La machine agricole, notamment la machine agricole pour semer ou pour l'application des engrais, comprenant un réservoir longitudinal (5), au moins une unité à semer (7) et au moins quatre roues (1), qui sont dans le régime de travail un rouleau de travail et dans le régime de transport des roues de transport, **caractérisé par le fait qu'**au moins quatre roues (1) sont posées au moins sur deux supports longitudinaux (2), qui sont en même temps joints au couple des supports transversaux (3, 4), disposés vis-à-vis d'eux-mêmes comme réciproquement mobiles.

2. La machine agricole, selon la revendication 1, **caractérisé par le fait qu'**au moins un des supports transversaux (4) est disposé en tant qu'un support fixe vis-à-vis du cadre porteur (6) de la machine agricole, et en même temps le deuxième des supports transversaux (3) est disposé en tant que mobil vis-à-vis du cadre porteur (6) de la machine agricole.

3. La machine agricole, selon la revendication 2, **caractérisé par le fait que** le support transversal (3), qui est mobil, est disposé en tant que mobil dans la direction transversale vis-à-vis du cadre porteur (6) de la machine agricole.

4. La machine agricole, selon les revendications 2 et 3, **caractérisé par le fait que** le support transversal (3), qui est mobil, est disposé devant le support transversal fixe (4) dans la direction du mouvement de travail de la machine agricole.

5. La machine agricole, selon une des revendications 2 jusqu'à 4, **caractérisé par le fait que** le support transversal (3), qui est mobil, est joint, par le moyen de mouvement linéaire (8), au porteur (6) de la machine agricole.

6. La machine agricole, selon une des revendications 2 jusqu'à 4, **caractérisé par le fait que** le support transversal (3), qui est mobil, est joint, par le moyen de mouvement linéaire (8), au porteur transversal fixe (4).

7. La machine agricole, selon une des revendications précédentes, **caractérisé par le fait que** le support longitudinal (2) est réalisé en tant que malléable par sa forme.

8. La machine agricole, selon une des revendications 1 jusqu'à 6, **caractérisé par le fait que** le support longitudinal (2) est joint, par l'articulation (11), au support transversal avant (3) et au support transversal arrière (4).

9. La machine agricole, selon une des revendications 1 jusqu'à 6, **caractérisé par le fait que** le support longitudinal (2) est joint, au support transversal avant (3) et au support transversal arrière (4), par un moyen flexible (12).

10. La machine agricole, selon une des revendications précédentes, **caractérisé par le fait que**, sur un support longitudinal (2), sont posées au moins deux roues (1).

11. La machine agricole, selon une des revendications 2 jusqu'à 10, **caractérisé par le fait que** le cadre porteur (6) est un réservoir longitudinal (5).

12. La machine agricole, selon une des revendications 5 jusqu'à 11, **caractérisé par le fait que** le moyen linéaire (8) est cylindre hydraulique.

13. La machine agricole, selon une des revendications précédentes, **caractérisé par le fait qu'**au moins une unité à semer (6) est disposée derrière au moins une roue (1) dans la direction du mouvement de travail de la machine agricole.

14. La machine agricole, selon une des revendications 5 jusqu'à 13, **caractérisé par le fait que** le moyen linéaire (8) est lié au système de direction de la machine, qui comprend le système de navigation.
